# EUROPÄISCHE PATENTSCHRIFT

(11) **EP 2 419 883 B1**
(45) Veröffentlichungstag und Bekanntmachung des Hinweises auf die Patenterteilung: **19.08.2015**
(21) Anmeldenummer: 10718851.8
(22) Anmeldetag: 26.03.2010
(51) Int. Cl.: G06T 13/20, G06T 15/04

(54) **Verfahren zur Darstellung eines animierten Objekts**
Method for representing an animated object
Procédé de représentation d'un objet animé

(30) Priorität: 18.04.2009 DE 102009018165
(43) Veröffentlichungstag der Anmeldung: 22.02.2012
(73) Patentinhaber: Schreiber&Friends, 14469 Potsdam (DE)
(72) Erfinder: SCHREIBER, Sven, 14469 Potsdam (DE)
(74) Vertreter: Reinders, Christian
(86) Internationale Anmeldenummer: PCT/DE2010/000391
(87) Internationale Veröffentlichungsnummer: WO 2010/118729

(56) Entgegenhaltungen:
- US-A- 5 630 043
- Vogel, Andreas: "Adobe Acrobat 3D Version 8 - 3D konstruktionen sicher austauschen und abstimmen", , 31. Mai 2007 (2007-05-31), XP002634606, Gefunden im Internet: URL:http://www.video2brain.com/de/products -136.htm [gefunden am 2011-04-15]
- ANONYMOUS: "The 3D Animation Process an Framework Media", , 31. Dezember 2005 (2005-12-31), Seiten 1-7, XP002633895, Gefunden im Internet: URL:http://www.frameworkmedia.com/pdfs/ani mation_process.pdf [gefunden am 2011-04-14]
- ANONYMOUS: "Animierte Textur", , 26. Mai 2008 (2008-05-26), Seiten 1-3, XP002633896, Gefunden im Internet: URL:http://wiki.delphigl.com/index.php/Ani mierte_Textur [gefunden am 2011-04-13]
- Curlington, Ian: "PDF3D Scientific Visualization with Interactive PDF Documents", , 23. Dezember 2007 (2007-12-23), Seiten 1-21, XP002633897, Gefunden im Internet: URL:http://www.pdf3d.com/news/PDF3D-SciViz -Manchester_13dec07.pdf [gefunden am 2011-04-16]
- Eyman, Yulia: "Rediscovering Fire: A Survey of Current Fire Models and Applications to 3D Studio Max", , 31. Dezember 2004 (2004-12-31), Seiten 1-8, XP002634607, Gefunden im Internet: URL:http://www.cs.umd.edu/~mount/Indep/Yul ia/fire.html [gefunden am 2011-04-21]

## Beschreibung

Die Erfindung betrifft ein Verfahren zur Darstellung eines animierten Objekts.

Die Darstellung von grafischen Objekten ist eine .der Hautanwendung von Computern mit zum Teil sehr großen Rechnerressourcen. Insbesondere bei der Simulation und Darstellung von dreidimensionalen Objekten, beispielsweise beim computergestützen Konstruieren (CAD-Computer Aided Design) von Objekten und der anschließenden Simulation eines bestimmten Objektverhaltens, sind umfangreiche Rechenoperationen notwendig. Herkömmlicherweise wird das Objekt in einem entsprechenden Zeichnungsprogramm, beispielsweise eine CAD-Programm erstellt, und anschließend wird das Objektverhalten bezüglich definierter Parametereigenschaften simuliert. Aufgrund der umfangreichen Rechenoperationen können die Simulationsberechnungen zum Teil Stunden oder sogar Tage andauern. Anschließend kann das so berechnete Objekt in dem Zeichnungsprogramm visualisiert werden, wobei jedoch jede Ansicht- oder Parameteränderung eine erneute Simulationsberechnung des Objekts innerhalb des Zeichnungsprogramms notwendig macht.

So beschreibt beispielsweise die DE 602 14 696. T2 die Simulation einer Strömung von Fluiden und eine Strukturanalyse in dünnwandigen dreidimensionalen Geometrien, wobei die Eingabe der Simulation als eine äußere Haut mit einen Finite Elemente Netz erfolgt.

Des Weiteren beschreibt die DE 698 31 385 T2 ein Verfahren und eine Anordnung zum Mischen von graphischen Objekten mit Planarkarten, welche in einer Seitenbeschreibungssprache beschrieben sind. Hierzu werden Abschnitte einer Seitenbeschreibungssprachendarstellung in eine Planarkartendarstellung umgewandelt und mit den Planarkartendarstellungen der graphischen Objekte gemischt. Der Vorteil liegt darin, dass Planarkarten eine vom Farbraum und der Auflösung unabhängige Art der Darstellung erlauben.

Ebenfalls beschreibt die US 7,123,269 B1 die Modifizierung von Vektorobjekten. Nach einer Benutzerauswahl von bestimmten Teilbereichen eines Bildes mit vielen Vektorobjekten können Parameter von selektiv bestimmten Vektorobjekten verändert und die veränderten Vektorobjekte wieder dargestellt werden.

Die Offenlegungsschrift US 2008/0303826 A1 offenbart ein Verfahren und ein System zur animierten Darstellung von zu Datenelementen korrespondierenden Objekten mittels einer intuitiven Eingabesprache.

US 5 630 043 beschreibt ein Verfahren zur Erzeugung und Verwendung von animierten Texturen mittels eines MPEG Decoders um eine Bewegung eines (Teil-) Objektes zu simulieren.

Problematisch an allen Lösungen im Stand der Technik ist, dass die Darstellung eines animierten Objekts immer nur im Zeichnungsprogramm möglich ist. Alternativ kann eine Bildsequenz des animierten Objekts vom Zeichnungsprogramm exportiert werden, wobei die Bildsequenz und bestimmte Parameter der Bildsequenz, wie beispielsweise der Betrachtungswinkel, nachträglich nicht verändert werden können.

Beispielsweise enthält das sogenannte 3D-PDF von Adobe Systems Incorporated standardmäßig rudimentäre Animationsfunktionen mit denen sich Körper in Form von Gliederpuppen animieren lassen. Mit Hilfe der Animationsfunktionen lassen nicht jedoch Oberflächenveränderungen der Körper verändern, beispielsweise deformieren, dehnen oder als eine Wellenbewegung auf dem Körper erzeugen. Derzeit ist es vor allem nicht möglich, die Auflösung des Körpers aufgrund äußerer Kräfte, beispielsweise als zerfließen oder als explodieren, im 3D-PDF-Format interaktiv darzustellen. Daher besteht zurzeit nicht die Möglichkeit eine vorberechnete Animation ablaufen lassen und diese durch überlagern von Objektsequenzen und Texturen bzw. den Blickwinkel der Betrachtung auf das animierte Objekt während der Animation interaktiv zu verändern.

Der Erfindung liegt die Aufgabe zugrunde, ein schnelles und ressourcensparendes Verfahren zur Darstellung eines animierten Objekts bereitzustellen, wobei die Darstellung des animierten Objekts interaktiv von einem Benutzer verändert werden kann.

Die Aufgabe wird durch ein Verfahren mit den Merkmalen nach Anspruch 1 gelöst. Erfindungsgemäß ist ein Verfahren zur Darstellung eines animierten Objekts in Form einer Animationssequenz vorgesehen, bei dem eine Abfolge von Einzelobjekten für jeden Zeitpunkt der Animationssequenz des Objekts erzeugt wird. Die Einzelobjekte bilden das Objekt zum jeweiligen Zeitpunkt vollständig ab und können zwei- oder dreidimensionale Darstellungen des Objekts sein.

Ein Objekt im Sinne der vorliegenden Erfindung ist eine zwei- oder dreidimensionale graphische Repräsentanz eines realen oder eines computergenerierten Gegenstandes, wie beispielsweise einem Schiff oder eine sich bewegende Meeresoberfläche.

Die Einzelobjekte werden für jeden Zeitpunkt nacheinander zusammengefügt und bilden den wesentlichen Teil der Animationssequenz des Objekts. Anschließend werden die Oberflächenveränderungen des Objekts als Texturanimation berechnet. Texturanimationen sind zweidimensionale Effekte des dreidimensionalen Objektes, die ähnlich einem Videoprojektor auf die Oberfläche des dreidimensionalen Objektes projiziert wird. Oberflächenveränderungen im Sinne der Erfindungen können beispielsweise Deformationen der Oberfläche, Materialveränderungen der Oberfläche, Flüssigkeitsbewegungen auf oder in dem Objekt oder Lichteffekte sein. Lichtverhältnisse kann man durch Texturanimation verändern, Farbeffekte und zweidimensionale Bewegungen ebenfalls, nicht jedoch die Form und Gestalt des dreidimensionalen Objektes. Die berechneten Oberflächenveränderungen als Texturanimation werden dann auf das Objekt in der Animationssequenz projiziert. Mit dem gleichzeitigen Ablaufen der Animationssequenz als Abfolge der Einzelobjekte mit der Texturanimation auf dem Objekt wird der Eindruck eines animierten Objekts für einen menschlichen Betrachter erzeugt.

Mittels eines dreidimensionalen Animationsprogramms, beispielsweise "Blender" oder "Lightwave3D" wird die Simulation des Objekts aufgrund innerer oder äußerer Kräfte berechnet. Alternativ kann das Animationsprogramm auch innerhalb eines Programms mit vektorbasierter Seitenbeschreibungssprache integriert sein. Im Rahmen der Darstellung der Simulation wird das Objekt in einfacher Weise dargestellt und die Abfolge der Einzelobjekten für definierte Zeitpunkte ausgeben. Nachdem die physikalischen Animationen langwierig berechnet wurden, erhält man eine Animationssequenz, die als Abfolge der dreidimensionalen Einzelobjekte abgespielt werden kann. Folglich kann der Betrachtungswinkel auf das animierte Objekt interaktiv bewegt werden. Mehrere solcher vorher berechnete Animations- und/oder Textursequenzen können frei zusammengesetzt und über eine Steuerung so miteinander verknüpft werden, dass der visuelle Eindruck für einen menschlichen Betrachter entsteht, als könnte die physikalischen Eigenschaften des animierten Objektes begrenzt verändert werden.

Vorteilhafterweise werden 25 Objekte pro Sekunde erzeugt, was vorteilhaft aufgrund der Physiognomik des Auges ist und beim Betrachter ein ruckfreies Erfassen der ablaufenden Animationssequenz mit Texturanimation ermöglicht. Diese aufwendig berechneten Einzelobjekte werden dann nacheinander mit hoher Geschwindigkeit abgespielt. Das Prinzip gleicht der Darstellung von Film, der ebenfalls aus vielen unbewegten Einzelbildern durch das schnelle Abspielen eine Bewegung vorspielt.

Durch die Integration der Texturanimation als simulierte Veränderung der Oberflächen des Objekts mit dem gleichzeitigen Ablaufen der Einzelobjekte wird der Eindruck eines animierten Objekts einem menschlichen Betrachter vermittelt. Diese so zusammengefasste Animationssequenz des animierten Objekts benötigt aufgrund der reduzierten Datendichte im Vergleich zum Abspielen im Zeichnungsprogramm weniger Speicherkapazität. Hierdurch ist eine interaktive Darstellung des animierten Objekts möglich, da die jeweiligen Einzelobjekte vollständig vorliegen und ebenfalls die Texturanimationen, beispielsweise als Licht- oder Flusssimulation, bezogen auf das animierte Objekt ermittelt wurden. Bei der interaktiven Veränderung (des Betrachtungswinkels auf das animierte Objekt ist daher nicht wie bisher eine erneute Animationssequenz im Zeichnungsprogramm mit zum Teil hohem Rechenaufwand zu ermitteln.

In einer vorteilhaften Ausgestaltung des Verfahrens ist vorgesehen, dass die Abfolge der Einzelobjekte mittels eines vektorbasierten Zeichnungsprogramms erstellt und mittels einer vektorbasierten Seitenbeschreibungssprache zur Animationssequenz zusammengesetzt wird. Vorteilhafterweise werden die Einzelobjekte entweder über die üblichen Export - und/oder Speicherfunktionen des vektorbasierten Zeichnungsprogrammes ausgegeben. Alternativ ist vorgesehen, dass die Einzelobjekte aus dem vektorbasierten Zeichnungsprogramm bzw. aus den durch das vektorbasierte Zeichnungsprogramm verwendeten Grafikspeichern herausgefiltert oder mittels Grabbing-Softwaretools mitgeschnitten werden. Das Grabbing-Softwaretool kann dabei entweder autonom genutzt werden oder ist Teil des in einer vektorbasierten Seitenbeschreibungssprache geschriebenen Programms.

Das Grabbing-Softwaretool kann dabei Teil des vektorbasierten Zeichnungsprogramms sein oder ein eigenes Programm sein, beispielsweise ein so genannter Gadget als Softwareapplikation. Das Grabbing-Softwaretool besitzt einen unmittelbaren Zugriff auf den Geometriespeicher, auf den Texturspeicher der Grafikkarte und/oder auf die Grafikausgabe, beispielsweise im OpenGL- oder DirectX-Ausgabeformat, zu um dort die Einzelobjekte herauszufiltern.

Hierdurch ist es möglich, beispielsweise die Simulation eines Schiffes in Verbindung mit einer Meereswellenanimation so zu kombinieren, dass eine interaktive Betrachtung des Schiffes mit einem in einer vektorbasierten Seitenbeschreibungssprache geschriebenen Programm durchzuführen. In einer beispielhaften Anwendung des Verfahrens kann ein Schiff als Objekt in dem Programm "Lightwave3D" erstellt werden. Anschließend wird das Schiffs-Objekt beleuchtet und die daraus entstehende Lichtsimulation in eine Grafik-Datei, beispielsweise im JPG-Format, angelegt, so dass der Lichtmoment festgehalten und im Rahmen der Animationssequenz als Texturanimation auf das animierte Objekt als Schiff projiziert werden kann. Nach der Berechnung der Schiffsbewegung als Bewegung des Objekts werden die das Objekt umgebenden Meereswellen als weitere Objekte mit einer zusätzlichen Texturanimation abgelegt. Die dabei auftretenden Effekte und Interaktionen der Objekte zueinander werden für jeden Zeitpunkt simuliert und als jeweilige Einzelobjekte in einfachen Objektmodellen abgespeichert. Insofern wird für jedes Einzelobjekt des Objekts Schiff und für alle Einzelobjekte der Objekte Meereswellen das Einzelobjekt und wahlweise eine gegebenenfalls zugehörige Texturanimation für das jeweilige Objekt abgespeichert .

Die so in jeweiligen Dateien abgelegten Einzelobjekte und Texturanimationen werden nunmehr in ein Programm mit vektorbasierter Seitenbeschreibungssprache importiert, beispielsweise das Programm Acrobat 3D Toolkit von Adobe Systems Incorporated. Nach dem Gruppieren der animierten Objekte zueinander und dem Projizieren der Texturanimationen auf die Objekte kann die Animationssequenz visualisiert werden. Die animierten Objekte werden entweder im Programm mit vektorbasierter Seitenbeschreibungssprache als Abfolge der Einzelobjekte kombiniert. Alternativ wird die bereits schon bestehende Abfolgesequenz der Einzelobjekte in das Programm mit vektorbasierter Seitenbeschreibungssprache importiert.

Die Texturanimation des Objekts wird vorteilhafterweise mittels des vektorbasierten Zeichnungsprogramms erstellt und mittels des Programms mit vektorbasierter Seitenbeschreibungssprache mit dem Objekt verknüpft. Dies hat den Vorteil, dass die Abfolge der Einzelobjekte und die Texturanimation unmittelbar mit Hilfe von Programmen mit vektorbasierter Seitenbeschreibungssprache zusammengefügt und nahezu plattformunabhängig abgespielt werden können. Gerade Programme mit vektorbasierter Seitenbeschreibungssprache ermöglichen eine plattformunabhängige Darstellung der Objekte.

In einer vorteilhaften Ausgestaltung des Verfahrens ist vorgesehen, dass die Texturanimation des Objekts aufgrund einer numerischen Simulation ermittelt und mittels der vektorbasierten Seitenbeschreibungssprache mit dem Objekt verknüpft wird.

Die Berechnung und Simulation des Objektverhaltens als Animationssequenz oder der Textur des Objekts als Texturanimation erfolgt über entsprechende Grundgleichungen, beispielsweise unter Zugrundelegung der Lattice-Boltzmann-Methode für die Berücksichtigung von inneren und äußeren Reibungskräften zur Simulation von Flüssigkeitsverhalten. Damit können Flüssigkeiten physikalisch korrekt im Sinne einer Simulation berechnet werden und erlauben dem menschlichen Betrachter einen visuellen Eindruck von den mit den animierten Objekten im Zusammenhang stehenden Abläufen und Interaktionen zwischen den Objekten zu geben. Beispielsweise kann das Fließverhalten von unterschiedlichen Flüssigkeiten innerhalb eines Objekts, beispielsweise innerhalb eines Rohrs, simuliert werden.

Es wird als Vorteil angesehen, dass eine weitere Texturanimation als Hintergrundebene des Objekts mittels des vektorbasierten Zeichnungsprogramms erstellt und mittels der vektorbasierten Seitenbeschreibungssprache als Hintergrundebene mit dem Objekt zur Animationssequenz verknüpft wird. Hierzu muss die Hintergrundebene gerade keine zu animierenden Objekte aufweisen, sondern das animierte Objekt mit Texturanimation vor dem Hintergrund einer ausschließlichen Texturanimation projiziert wird. Hierdurch werden Rechenoperationen eingespart, da keine Einzelobjekte für die Hintergrundebene erstellt und zusammengefügt werden müssen.

Dadurch das die Texturanimation unabhängig von den Einzelobjekten bzw. den Objekten erzeugt wird, kann die Texturanimation interaktiv auf der Grundlage von vorgebbaren Randbedingungen variiert und die jeweils variierte Texturamination auf das animierte Objekt mittels der vektorbasierten Seitenbeschreibungssprache interaktiv projiziert werden. So können Änderungen der Texturanimation, beispielsweise Lichtverhältnisse oder ein verändertes Materialverhalten, interaktiv vom Benutzer oder aufgrund von Vorgaben geändert und anschließend auf das zu animierende Objekt projiziert werden. Damit ist nicht nur eine interaktive und allseitige Betrachtung des animierten Objekts in einem Programm mit vektorbasierter Seitenbeschreibungssprache möglich, sondern gleichzeitig auch eine interaktive Veränderung der Texturanimation in dem Programm mit vektorbasierter Seitenbeschreibungssprache.

Vorteilhafterweise wird ein Betrachtungswinkel auf das animierte Objekt mittels der vektorbasierten Seitenbeschreibungssprache interaktiv gesteuert. Da die Einzelobjekte als zwei- oder dreidimensionale Objektkörper vorliegen, können diese auch allseitig betrachtet werden. Da ebenfalls die jeweiligen Texturanimationen auf die jeweils zugeordneten Objekte projiziert werden, kann auch der Betrachtungswinkel während der Animationssequenz des animierten Objekts verändert. Diese Veränderung des Betrachtungswinkels auf die Animationssequenz des animierten Objekts ist in bisherigen Objektdarstellungen in vektorbasierten Seitenbeschreibungssprachen nicht möglich gewesen. Hierzu ist es ebenfalls wichtig, dass eine Lichttextur bezogen auf das Objekt berechnet und in Abhängigkeit vom Betrachtungswinkel auf das Objekt projiziert wird.

Damit die Darstellung der Animationssequenz des animierten Objekts auch bei geringen Rechnerressourcen abspielbar ist, ist das Objekt aus Polygone und/oder Dreiecke und/oder nicht-uniforme rationale B-Splines und/oder Voxels zusammengesetzt. Nicht-uniforme rationale B-Splines, kurz NURBS sind mathematisch definierte Kurven oder Flächen, die im Computergrafik-Bereich, zur Modellierung beliebiger Formen verwendet werden. Die Darstellung der Geometrieinformation erfolgt über stückweise funktional definierte Geometrie-Elemente. Jede beliebige technische herstellbare oder natürliche Form eines Objekts bzw. Teilbereiche eines Objekts können mit Hilfe von NURBS dargestellt werden.

Es wird als Vorteil angesehen, dass eine erste Abfolge von Einzelbildern des Objekts für eine erste Animationssequenz mit einer zweiten Abfolge von Einzelbildern des Objekts für eine zweite Animationssequenz kombiniert wird. Durch die Bereitstellung von mehreren Animationssequenzen des Objekts können die Animationssequenzen entweder gleichzeitig oder alternativ abgespielt werden. Animationssequenzen können damit während des Abspielvorganges durch den Benutzer gegeneinander ausgetauscht werden. In Verbindung mit der interaktiven Steuerung des Betrachtungswinkels sind damit Benutzer umfangreiche Variationsmöglichkeiten innerhalb der vektorbasierten Seitenbeschreibungssprache gegeben.

Vorteilhafterweise werden erste Oberflächenveränderungen für die erste Abfolge von Einzelbildern des Objekts als erste Texturanimation und zweite Oberflächenveränderungen für die zweite Abfolge von Einzelbildern des Objekts als zweite Texturanimation berechnet und mit den Animationssequenzen mittels der vektorbasierten Seitenbeschreibungssprache zusammengefügt werden. Innerhalb der vektorbasierten Seitenbeschreibungssprache ergeben sich hierdurch umfangreiche Variationsmöglichkeiten der Texturanimationen bezüglich des animierten Objekts. In Verbindung mit dem Vorliegen von alternativen Animationssequenzen als Abfolge von variierten Einzelobjekten können innerhalb der vektorbasierten Seitenbeschreibungssprache umfangreiche Variationen des animierten Objekts vorgenommen werden, die entweder nur die Oberfläche des animierten Objekts als Texturanimation oder sogar die Bewegung und das Objekt an sich als Animationssequenz betreffen.

Für mehrere Objekte und/oder die Hintergrundebene werden vorteilhafterweise jeweils Oberflächenveränderungen ermittelt und mittels der vektorbasierten Seitenbeschreibungssprache zusammengefügt.

In einer vorteilhaften Ausgestaltung des Verfahrens ist vorgesehen, dass die ersten und letzten Einzelobjekte der Animationssequenz so aufeinander abgestimmt werden, dass eine Endlosschleife der Animationssequenz darstellbar ist . Die Abstimmung der Anfangs- und Endobjekte der Animationssequenz erfolgt vorteilhaftweise mit einem sogenannten Loopeditor. Die Endlosschleife kann auch bezüglich ausgewählter Einzelobjekte im Mittelteil der Animationssequenz angewendet werden. Der Loopeditor stellt die berechneten Abfolgen der Einzelobjekte in Pictogrammen oder als Objektdarstellung auf einer Zeitleiste dar - ähnlich einem Videoschnittprogramm oder einem Node-Editor, bekannt aus 3D-Animationsprogrammen zur Übersicht von der grafischen Programmierung von beispielsweise Shadern. Denn auch hier gibt es die Möglichkeit, Abfolgen der Einzelobjekte zu kopieren, löschen und zu schneiden. Im Loopeditor ist ein zusätzliches Fenster integriert, in dem die Animationssequenz des derzeit animierten Objekts abläuft. Das erste Fenster zeigt, animiert, den Bereich, den man gerade bearbeitet, das zweite Fenster zeigt das erste Einzelobjekt und das letzte Einzelobjekt überlappend, wobei das Anfangs- und das Endeinzelobjekt halb transparent und überlappend dargestellt werden. Wahlweise können auch die ersten zehn Einzelobjekte und die letzten zehn Einzelobjekte animiert dargestellt werden, um zu sehen, wo man am besten schneidet. Eine zusätzliche Funktion des Loopeditors ermöglicht das automatische Annähern zwischen dem Anfang und dem Ende der Endlosschleife.

Durch die Festlegung eines nahezu nahtlosen Überganges zwischen dem Anfangseinzelobjekt und den Endeinzelobjekt kann die Animationssequenz praktisch endlos abgespielt werden, ohne dass dem menschlichen Betrachter die Übergänge von Endeeinzelobjekt zum Anfangseinzelobjekt auffallen. In einer vorteilhaften Ausgestaltung des Verfahrens ist vorgesehen, dass bei der Simulation und Erzeugung der Abfolge der Einzelobjekte bereits entsprechende Randbedingungen und/oder Parameter so gesetzt werden, dass das Endeinzelobjekt der Animationssequenz mit dem Anfangseinzelobjekt nahezu übereinstimmt.

Für den Fall, dass ein Übergang vom Endeinzelobjekt auf das Anfangseinzelobjekt der Animationssequenz nicht möglich ist, wird die Animationssequenz in Teilsequenzen unterteilt. Beispielsweise kann bei einer Fließsimulation von Wasser durch ein gebogenes Rohr die Animationssequenz so gestaltet werden, dass das Einfließen des Wassers in das Rohr nicht im Rahmen einer Endlosschleife wiederholt wird. Das Wasser fängt an zu laufen und durchläuft das Rohr bis zum gewünschten Ende der Animationssequenz. Im Mittelteil der Animationssequenz ist Wasser bereits am Ende des Rohrs angekommen und fließt durch die Rohre, so dass es vermutlich keine großen Veränderungen der Fließeigenschaften mehr und damit diese Mittelsequenz wiederholt werden kann. In einer Endsequenz der Animationssequenz kann dann das Abstellen des Wassers und Leeren des Rohres als nicht wiederholfähige Sequenz dargestellt werden.

Im Loopeditor kann der menschliche Betrachter aufgrund seiner Erfahrung die Teilsequenzen der Animationssequenz so definieren und konfigurieren, dass die gegebenenfalls unterschiedlich konfigurierten Teilsequenzen die Animationssequenz bilden. Die so definierte Abfolge der Einzelobjekte kann innerhalb eines Programms mit vektorbasierter Seitenbeschreibungssprache, beispielsweise als 3D-PDF oder alternativ auch andere Abspielumgebungen wie das Programm "Silverlight" der Mircosoft Cooperation oder das Softwaretool "Flash" von der Adobe Systems Incorporated, wie gewünscht abgespielt werden. Darüber hinaus lässt sich die Abfolge der Einzelobjekte in der vektorbasierten Seitenbeschreibungssprache nachträglich noch modifizieren. Ebenfalls können weitere graphische Optumierungen, beispielsweise eine Polygonreduzierung (Polygonreducement) vorgenommen werden. Die so erstellte Animationssequenz kann dann in ein Programm mit vektorbasierten Seitenbeschreibungssprache eingelesen, als Flashanimation oder in Form einer Steuerdatei für ein interaktives dreidimensionales Objekt genutzt werden.

Zusätzlich zur Synchronisation der Anfangseinzelobjekte und der Endeinzelobjekte in einer Animationssequenz kann die jeweilige Textursequenz synchron in einer Endlosschleife abgespielt werden, wobei das erste und das letzte Einzelobjekt der Animationssequenz und die zugeordnete Oberflächenveränderung als Textur des ersten und des letzten Einzelobjekts nahezu identisch sind. Hierdurch ist eine größtmögliche Bandbreite der Variationsmöglichkeiten für den menschlichen Betrachter gegeben, so dass neben der Auswahlmöglichkeit aus mehreren Animationssequenzen auch unterschiedliche Texturanimationen für die jeweils ausgewählte Animationssequenz vom menschlichen Betrachter in der vektorbasierten Seitenbeschreibungssprache zusammengestellt werden können.

In einer vorteilhaften Ausgestaltung des Verfahrens ist vorgesehen, dass die Abfolge der Einzelbilder und/oder die Texturanimation und/oder die Lichttextur in einer Anzeigeeinheit angezeigt werden.

Um den Rechenaufwand für die Simulation und Ermittlung der Einzelobjekte für die Animationssequenz zu verringern, werden lediglich Schnittebenen der Einzelobjekten bezogen auf vorgebbare Ebenen ermittelt und bezogen auf diese Ebenen angezeigt. Auch wenn das Verhalten eines dreidimensionalen Objekts simuliert und animiert werden soll, setzt sich die Animationssequenz lediglich aus Teilbereichen oder Schnittebenen der Einzelobjekte zusammen. Dies minimiert den Rechenaufwand und die Datengröße der Animationssequenz. Es ist vorgesehen, unterschiedliche Animationssequenzen bezüglich unterschiedlicher Schnittebenen und Teilbereiche zu erstellen. Mittels der vektorbasierten Seitenbeschreibungssprache können dann die jeweiligen Teilbereiche oder Schnittebenen der Einzelobjekte durch das interaktive Auswählen der jeweils gewünschten Animationssequenz und damit der jeweils gewünschte Schnittebene schnell und einfach durch einen menschlichen Betrachter betrachtet und zwischen den einzelnen Animationssequenzen hin- und hergeschaltet werden.

Die Abfolge der Einzelobjekte und/oder die Texturanimation werden mittels einer Simulationseinheit ermittelt. In dem gerade nicht mittels aufwendiger und komplexer Simulationsprogramme die Abfolge der Einzelobjekte und/oder die Texturanimation berechnet werden müssen, kann eine auf das zu simulierende Problem zugeschnittene Simulationseinheit verwendet werden. Die Simulationsprogramme erfordern eine umfangreiche Bedienung und Steuerung, die nur von speziell geschulten Fachleuten vorgenommen werden kann. Die Simulationseinheit kann hingegen so konzipiert sein, dass nur ein minimaler Speicherplatz benötigt wird und die Eingabe auch durch einen Nichtfachmann möglich ist. Beispielsweise kann die Parametereingabe durch den Benutzer ein Wasserfluss durch ein Rohr erstellt werden, der nach einem Simulationsverhalten auf ein Kollisionsobjekt - hier das Rohr- treffen kann, wo sich dann die Objekte als Wasserbestandteile entsprechend der Simulation verteilen. Die Echtzeitdarstellung erfolgt mittels Partikelpünkte oder mittels Voxels zur schnellen Auffassung oder bezogen auf vorgegebene Schnittebenen des Kollisionsobjekts. Die genaue Definition des Kollisionsobjekts erfolgt durch die Lokalisierung der Polygon/Triangles-Flächen- also das auslesen der Grenzen des Kollisionsobjekts oder durch Vorgaben des Benutzers.

Dazu muss der Benutzer eine Toolbox öffnen und kann dann zwischen verschiedenen Rohr-Querschnitten, sogenannten "Shapes", auswählen. Der Benutzer gibt dann einen Radius Für den Durchmesser des Rohrs als Kollisionsobjekt an oder definiert diesen interaktiv mittels einer grafischen Auswahl. Danach zieht er die Linie durch das Rohr als Kollisionsobjekt. Es stehen Kurvenwerkzeuge, Weichen und weiteres für die Erstellung des Pfads zur Verfügung. Der Benutzer mittels der Toolbox selektiv die Shapes auswählen. Alternativ einem Computer diese Aufgabe übergeben werden, innerhalb eines automatisierten Verfahrens die Shapes auswählt.

Danach wird die Echtzeitvorschau der Animationssequenz in dem erstellten Pfad dargestellt und der Benutzer kann mit der Parametrisierung arbeiten. Ist der Benutzer zufrieden mit der Simulation kann er auf Knopfdruck die komplexe dreidimensionale Simulation starten und sich die hieraus abgeleitete Animationssequenz ausgeben lassen. Wahlweise kann der Benutzer auch Texturanimationen generieren, die später auf die fertige Animationssequenz projiziert werden.

Es ist mittels des vorliegenden Verfahrens ebenfalls möglich, vom Benutzer definierte Fläche, beispielsweise eine Wasseroberfläche, in der Simulationseinheit zu importieren. Danach kann der Benutzer die notwendigen Parameter, wie beispielsweise Windrichtung und -stärke, eingeben und damit die Simulation einer Welle berechnet werden. Zusätzliche Objekte wie Schiffe können auf die Wasseroberfläche gesetzt werden. Durch die Wellenbewegungen entstehen weitere Wellen und Gischt. Die Animationssequenz zeigt Geometrien und Texturen zur groben Vorschau an.

Ist der Benutzer zufrieden mit der Simulation kann er auf Knopfdruck die komplexe dreidimensionale Simulation starten und sich die fertige Animationssequenz ausgeben lassen. Bei dieser Form der Simulation wird die geschlossene Wasseroberfläche in Teilbereiche zerfallen, die Gischt besteht erst einmal aus Partikeln, Polygonen oder Volumenobjekten wie "Voxels" und wird später ebenfalls in Teilbereiche zerfallen. Die aufschlagenden Wassertropfen der Gischt und der sich überschlagenden Wellen werden als Texturen auf der Wasseroberfläche gespeichert. Beide Verfahren können separat oder gemeinsam unter Nutzung moderneren und leistungsfähigeren Rechnern in Echtzeit dargestellt werden oder ebenfalls als 3D-Objekt-Sequenzen exportiert oder/und verarbeitet werden.

Ausgewählte Eigenschaften für die Oberflächensimulationen der Wasseroberfläche, wie Farbigkeit oder Transparenz, können ebenfalls vom Benutzer verändert werden. Die Wellenbewegungen der Wasseroberfläche werden mittels so genannter Zentren, in dem die Wellen entspringen, erstellt. Mit der Methode ist es möglich, dass die Welle ihr Volumen, Kraft und Geschwindigkeit kennt um korrekte Kräfteverteilungen an weiteren Objekten, wie einer Mauer oder an einem Schiff, durchzuführen damit sich alles physikalisch korrekt bewegt. Alternativ kann auch ein ein Flash-Programm zum Abspielen der Aminationssequenz verwendet werden.

Als vektorbasierte Seitenbeschreibungssprache wird vorteilhafterweise das Portable Document Format (PDF) Datenformat verwendet. Alternative sind aber auch andere Plattformen wie Microsofts "Silverlight", Adobes "Flash" usw. anwendbar. Es wird als Vorteil angesehen, dass die Datengröße der Animationssequenz auf die Bildgröße einer Anzeigeeinheit reduzieren wird.

Des Weiteren löst ein Computerprogramm und ein Computerprogrammprodukt die Aufgabe, wobei das Computerprogrammprodukt in einem computerlesbaren Medium gespeichert ist und computerlesbare Mittel umfasst, mittels derer ein Computer veranlasst wird, das erfindungsgemäße Verfahren durchzuführen, wenn das Programm in dem Computer abläuft. Die vorliegende Erfindung kann in Form von Hardware, Software oder einer Kombination von Hardware und Software realisiert werden. Hierfür ist jede Art von System bzw. jede andere zum Ausführen des erfindungsgemäßen Verfahrens eingerichtete Vorrichtung geeignet. Die vorliegende Erfindung kann auch in ein Computerprogrammprodukt integriert werden, welches alle Merkmale umfasst, die es zur Realisierung der hier beschriebenen computergestützten Verfahren befähigen, und welches nach dem Laden in ein Computersystem in der Lage ist, diese Verfahren auszuführen.

Unter den Begriffen Computerprogramm und Computerprogrammprodukt ist im vorliegenden Zusammenhang jeder Ausdruck in einer beliebigen Computersprache, Code oder Notation eines Satzes von Anweisungen zu verstehen, welche ein Computersystem zur Datenverarbeitung und so zur Ausführung einer bestimmten Funktion befähigen. Das Computerprogramm bzw. das Computerprogrammprodukt ist entweder direkt oder nach einer Umwandlung in eine andere Sprache, Code, Notation oder durch die Darstellung in einer anderen materiellen Form auf dem Computersystem lauffähig.

Weitere vorteilhafte Ausgestaltungen finden sich in den Unteransprüchen. Die vorliegende Erfindung wird anhand der Ausführungsbeispiele in den Figuren näher erläutert. Dabei zeigt beispielhaft die
- FIG 1: ein Ablaufdiagramm mit den wesentlichen Verfahrensschritten;
- FIG 2: eine schematische Darstellung der wesentlichen Verfahrensschritte;
- FIG 3: eine perspektivische Ansicht eines Objekts mit unterschiedlichen Schnittebenen;
- FIG 4: eine Ansicht eines Objekts in einem vektorbasierten Seitenbeschreibungssprachenprogramm;
- FIG 5: eine schematische Darstellung der wesentlichen Verfahrensschritte mit einem Vorschauprogramm.

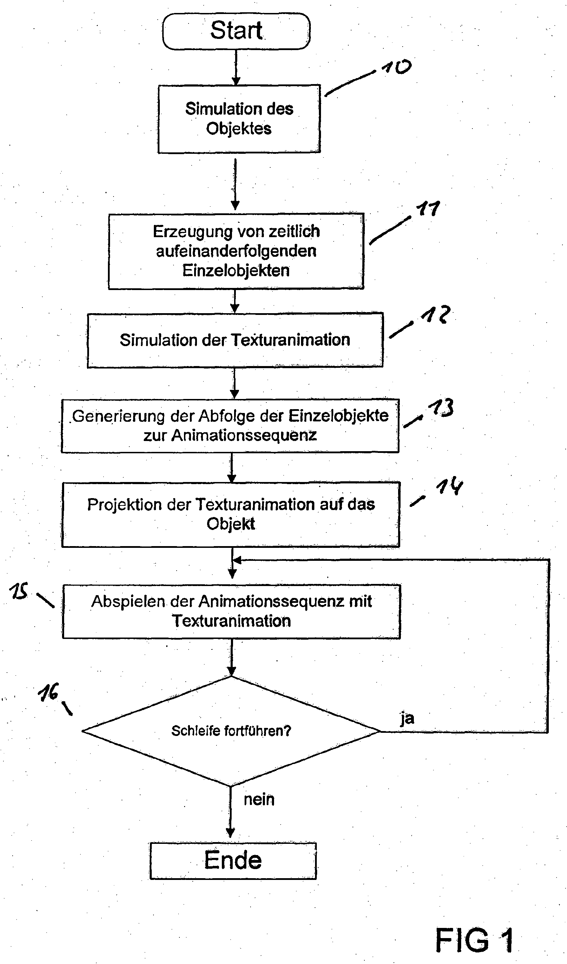

Die Fig. 1 zeigt ein Ablaufdiagramm mit den wesentlichen Verfahrensschritten. Nach dem Starten des Verfahrens wird eine Simulation 10 des Objekts 1 (nicht dargestellt) durchgeführt. In einem Zeichnungsprogramm 5 (nicht dargestellt), wie beispielsweise Lightwave3D, oder in einer Simulationseinheit, wird das Verhalten des Objekts 1 simuliert und in zeitlich aufeinanderfolgende Einzelobjekte 2a,2b,2c,2d,2e,2f,2g (nicht dargestellt) generiert.

Darüber hinaus wird die Textur des animierten Objekts 1 entweder im Zeichnungsprogramm 5 oder mittels eines eigenen Editors 6 (nicht dargestellt) generiert und simuliert 12 und als Texturanimation 4a,4b (nicht dargestellt) abgespeichert. Die Simulation der Texturanimation 12 kann alternativ auch parallel zur Simulation des Objektes 10 bzw. vollständig unabhängig von der Simulation des Objektes 10 erfolgen. Anschließend werden die Einzelobjekte als zeitliche Abfolge zu einer Animationssequenz 3a,3b (nicht dargestellt) zusammengefügt 13. Alternativ können die Einzelobjekte 2a,2b,2c,2d,2e,2f,2g auch einzeln aus dem Zeichnungsprogramm 5 ausgelesen und anschließend in einem weiteren Vorschauprogramm 17 (nicht dargestellt) als Previewer betrachtet und/oder als Abfolge und damit als Animationssequenz 3a,3b zusammengesetzt werden. Anschließend wird die Texturanimation 4a,4b auf die Animationssequenz 3a,3b projiziert 14 und bildet damit die Oberflächenveränderungen des animierten Objekts 1 ab. Das Abspielen der Animationssequenz 3a,3b mit der Texturanimation 4a,4b wird mittels einer Schleifenoperation 16 so oft wiederholt, bis eine interne Bedingung oder ein Abbruch durch einen menschlichen Betrachter erfolgt.

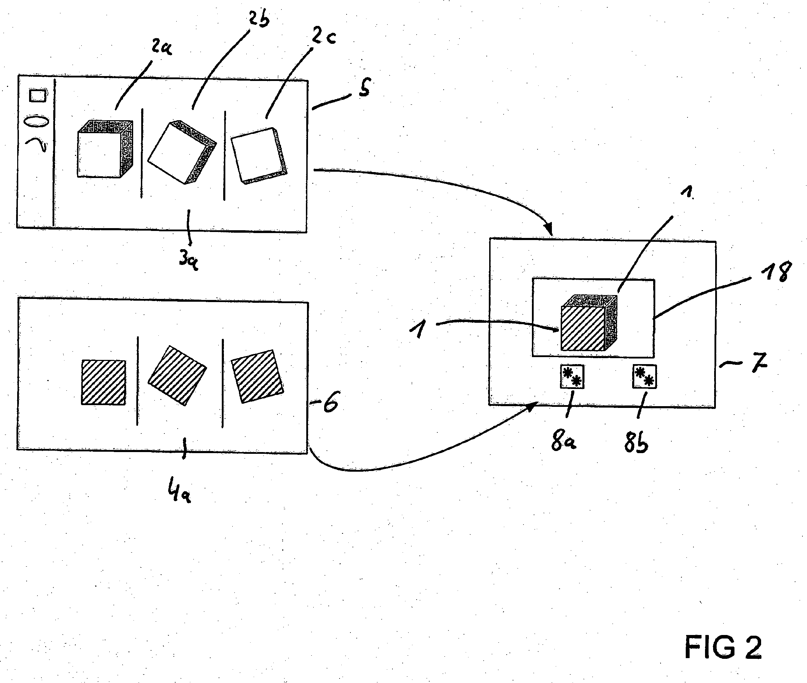

In der Fig. 2 ist eine schematische Darstellung der prinzipiellen Verfahrensabläufe dargestellt. In dem Zeichnungsprogramm 5 werden die Einzelobjekte 2a, 2b, 2c generiert und das zeitliche Verhalten simuliert. In dem Zeichnungsprogramm 5 werden die Einzelobjekte 2a, 2b, 2c bereits als Abfolge zu einer Animationssequenz 3a zusammengefügt. Die Animationssequenz 3a ist durch die senkrechten Strichen zwischen den Einzelobjekten 2a, 2b, 2c angedeutet und soll die zeitliche Abfolge der Einzelobjekte 2a,2b,2c andeuten. In einem weiteren Programm 6 werden die Texturen zu einer Texturanimation 4a verbunden, wobei die Texturanimation 4a wieder durch die senkrechten Striche zwischen den Texturen angedeutet ist. Die Animationssequenz 3a und die Texturanimation 4a werden in ein Programm mit vektorbasierten Seitenbeschreibungssprache 7 geladen und können mittels Steuerelementen 8a,8b in einer Anzeigeeinheit 18 abgespielt werden. Mit den Steuerelementen 8a, 8b können der Ablauf und die Geschwindigkeit der Animationssequenz 3a mit Texturanimation 3b vom menschlichen Benutzer gesteuert werden.

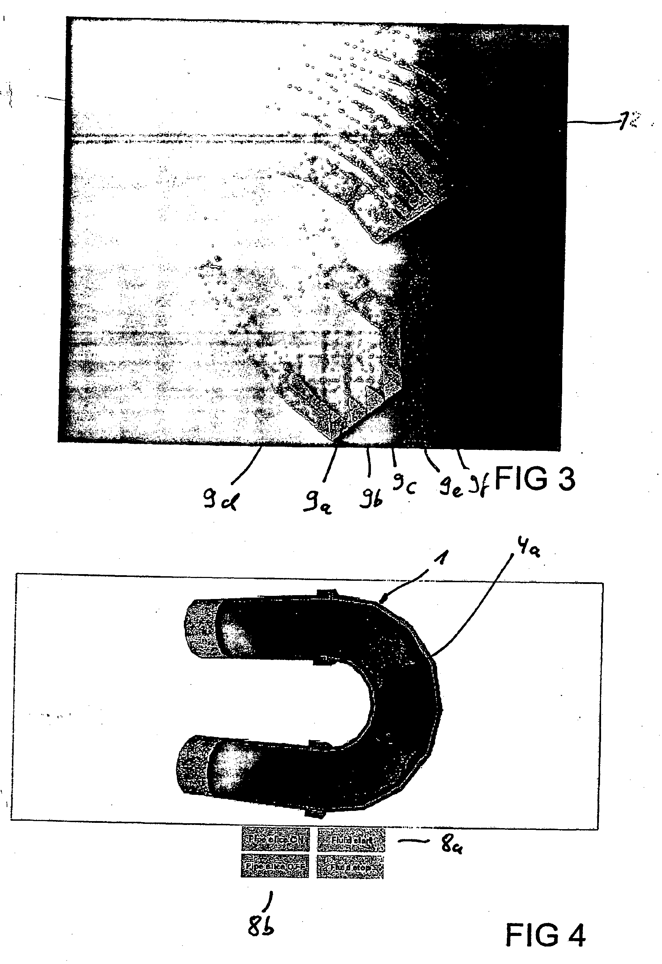

Die Fig. 3 zeigt eine perspektivische Ansicht eines Objekts 1 mit unterschiedlichen Schnittebenen 9a, 9b, 9c, 9d, wobei nicht alle dargestellten Schnittebenen der Übersicht halber einer Figurbezeichnungen zugeordnet sind. Die Berechnung der Animationssequenz 3a, 3b (nicht dargestellt) und der Texturanimation 4a, 4b, 4c (nicht dargestellt) erfolgt auf der Basis einer Simulation für das gesamte Objekt 1. Die die eigentlichen Animationen 3a,3b,4a,4b,4c werden jedoch lediglich bezüglich vorgebbarer Schnittebenen 9a,9b,9c,9d,9f,9g dargestellt und projiziert. Im gezeigten Beispiel der FIG. 3 unterteilen drei radial verlaufende Schnittebenen 9a,9b,9c den Innenbereich eines rohrförmigen Objekts 1. Des Weiteren verlaufen innerhalb des Rohres als Objekt 1 drei axial verlaufende Schnittebenen 9d, 9f, 9g. Die Ausgabe der Animationssequenz 3a, 3b und der Texturanimation 4a, 4b, 4c erfolgt lediglich bezüglich der Schnittebenen 9a,9b,9c,9d,9f,9g, was nur geringe Rechenkapazitäten erfordert.

Durch die Darstellungen eines dreidimensionalen Objektverhaltens in den zweidimensionalen Schnittebenen 9a, 9b, 9c, 9d, 9f, 9g - gegebenenfalls aufgrund einer automatischen Detektion der Objektgeometrien im Rahmen der Simulation 10- lässt sich das dreidimensionale Simulationsverhalten des animierten Objekts 1 zweidimensional darstellen. Im Rahmen der Simulation 10 wird automatisch einen Pfad, an dem sich die 2D-Texturen der in Echtzeit funktionierenden Fluidsimulation der Animationssequenz 3a,3b binden lässt, erstellt.

Insgesamt werden, je nach Rechnerkapazität mehrere solcher "2D-Slices" als Schnittebenen 9a, 9b, 9c, 9d, 9f, 9g in das Rohr als Objekt 1 gelegt und horizontal und vertikal verschachteln. Bei 3x3 Schnittebenen 9a, 9b, 9c, 9d, 9f, 9g wie im gezeigten Beispiel der Fig. 3 werden somit neun Animationssequenzen 3a,3b und/oder Texturanimationen 4a, 4b, 4c erstellt und verschaffen somit in der Kombination einem Benutzer einen sehr realistischen dreidimensionalen Eindruck bezüglich des Verhaltens des animierten Objekts.

Die Fig. 4 zeigt einen Ausschnitt aus einer Animationssequenz 4a (nicht dargestellt) des animierten Objekts 1. Im gezeigten Beispiel der Fig. 4 braucht das Objektverhalten des statischen Rohres nicht berechnet werden. Das durch das Rohr fließende Medium wird mittels einer Simulation simuliert und als Einzelobjekte 2a,2b,2c abgespeichert. Anschließend wird die Oberflächenveränderung der Flüssigkeit beim Durchfluss durch das Rohr simuliert und als Texturanimation 4a, 4b abgespeichert. In dem Programm mit vektorbasierten Seitenbeschreibungssprache, beispielsweise 3D-PDF oder beispielsweise Microsofts "Silverlight", Adobes "Flash", können dann die Animationssequenz 3a,3b und die Texturanimation 4a,4b,4c zusammengefügt und abgespielt werden. Aufgrund der einfachen Art der Programmierung ist es darüber hinaus möglich, in der vektorbasierten Seitenbeschreibungssprache Buttons und Icons als Steuerelemente 8a,8b zu definieren, die ein Abspielen der Animationssequenz 3a,3b mit der Texturanimation 4a, 4b, 4c ermöglichen. Gleichzeitig kann mittels der Steuerelemente 8a,8b vom menschlichen Betrachter interaktiv der Betrachtungswinkel auf das animierte Objekt 1 verändert werden.

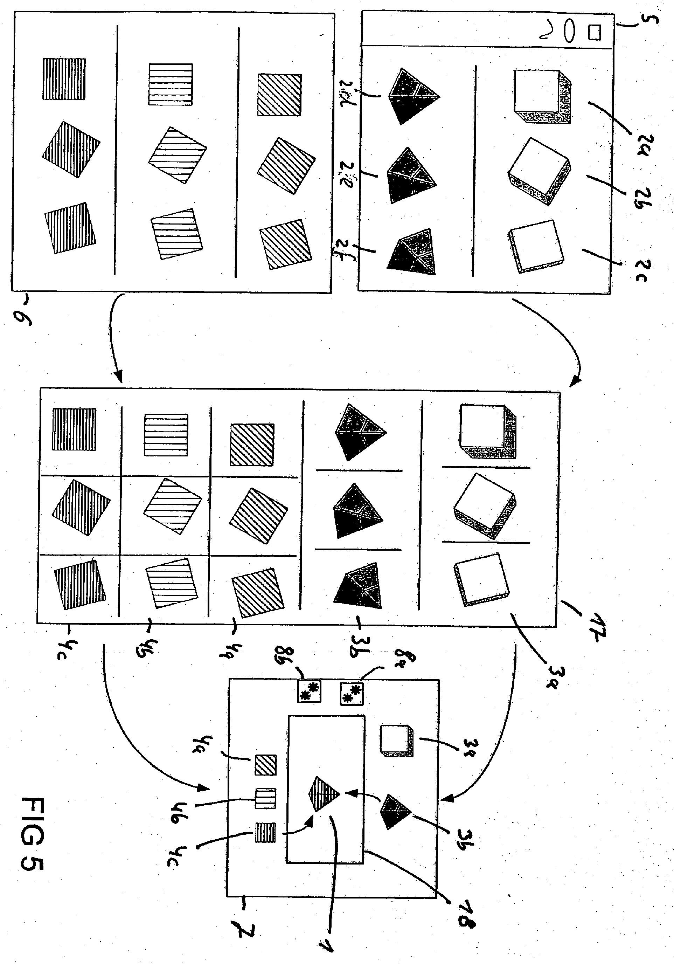

Die Fig. 5 zeigt eine schematische Darstellung der wesentlichen Verfahrensabläufe mit einem Vorschauprogramm 17. In dem Zeichnungsprogramm 5 werden die Einzelobjekte 2a, 2b, 2c, 2d, 2e, 2f, 2g aufgrund einer vom Benutzer vorgegebenen Simulation generiert. In dem weiteren Programm 6 werden entsprechende Texturen bezüglich der Oberflächenveränderungen der Einzelobjekte 2a, 2b, 2c, 2d, 2e, 2f, 2g ermittelt. In dem Vorschauprogramm 17 kann die zeitliche Abfolge der jeweils zusammengehörigen Einzelobjekte 2a, 2b, 2c, 2d, 2e, 2f, 2g betrachtet werden, wobei ein Benutzer anschließend die Möglichkeit hat, aus dieser Vorschau eine Animationssequenz 3a,3b zu generieren. Ebenfalls kann die Abfolge der Texturen betrachtet und anschließend eine Texturanimation 4,a, 4b, 4c erstellt werden. Die Animationssequenzen 3a, 3b und die Texturanimationen 4a,4b,4c werden dann in das Programm mit vektorbasierten Seitenbeschreibungssprache 7 geladen und können mittels Steuerelementen 8a, 8b in einer Anzeigeneinheit 18 abgespielt werden. Der Benutzer hat dabei ebenfalls die Möglichkeit interaktiv und während des Ablaufens einer ersten Animationssequenz 3a,3b mit einer ersten Texturanimation 4a,4b,4c die Animationssequenz 3a,3b und/oder die Texturanimation 4a,4b,4c wechselseitig zu kombinieren und sich aus unterschiedlichen Betrachtungswinkel anzusehen. In dem Vorschauprogramm 17 kann ebenfalls eine Simulationseinheit integriert sein, in der die im Zeichnungsprogramm 5 und/oder im weiteren Programm 6 generierten Einzelobjekte 2a,2b,2c,2d,2e,2f,2g und/oder Texturen simuliert werden.

In dem Programm mit vektorbasierter Seitenbeschreibungssprache 7 startet der Benutzer ein Programm oder ein Plugin und importiert die Einzelobjekte 2a,2b,2c,2d,2e,2f,2g über Adobe Acrobat 3D Toolkit oder als OBJ-Datei bzw. als weitere unterstützende Dateiformate.

Beispielsweise hat der Benutzer bei einer Durchflusssimulation durch ein Rohr gemäß den Beispielen der Fig. 3 und Fig. 4 dann die Möglichkeit das Rohr als Objekt 1 zu definieren und wählt beispielsweise den Radius des Rohres und die Auflösung der weiteren Objekte als Volumenkörper des Fluids aus. Danach kann der Benutzer im Vorschauprogramm 17 eine entsprechende Vorschau der Einzelobjekte 2a, 2b, 2c, 2d, 2e, 2f, 2g und/oder der Texturen bzw. die zeitliche Abfolge der Einzelobjekte 2a, 2b, 2c, 2d, 2e, 2f, 2g und/oder der Texturen in einer Anzeigeneinheit betrachten. Hierzu wird bezüglich mehrerer Schnittebenen 9a, 9b, 9c, 9d, 9e, 9f dass Modellverhalten der Einzelobjekte 2a, 2b, 2c, 2d, 2e, 2f, 2g und/oder der Texturen berechnet und mittels Echtzeitvorschau im dreidimensionalen Rohr als Objekts 1 dargestellt.

Weiterhin können im Rahmen der Vorschau interaktiv die Parameter und Eigenschaften des Fluides geändert werden. Es gibt auch eine Standardeinstellung, die Materialien wie Wasser, Öl oder Gase auf Mausklick in die Parametereinstellung übernimmt. Während der Benutzer seine Parametereingabe vornimmt, kann er im Vorschauprogramm 5 in Echtzeit sehen, wie sich die Einstellungen direkt im Previewer verändern. Ebenfalls kann der Benutzer noch die Art der Texturen einstellen und interaktiv verändern. Wenn der Benutzer mit der Einstellung zufrieden ist, drückt er einen Button "Erstelle 3D-Sequenz" und muss dazu noch angeben, nach welcher Formel er die physikalische Simulation berechnet haben möchte. Dann werden alle Parameter in die 3D-Engine übernommen und aus Polygonen, Partikeln und/oder Volumenmodellen wie Voxels wird die Animationssequenz 3a,3b wahlweise mit oder ohne Texturanimation 4a,4b,4c berechnet 13,14. Die so berechneten Animationssequenzen 3a,3b und/oder Texturanimationen 4a,4b,4c werden gespeichert. Anschließend werden im Loopeditor die Animationssequenzen 3a,3b und/oder Texturanimationen 4a, 4b, 4c so bearbeitet, dass ein Start-, ein Mittel- und ein Endteil der Animationssequenzen 3a, 3b und/oder Texturanimationen 4a,4b,4c zur Verfügung steht und in das Programm 3D-PDF oder in andere Plattformen wie Microsofts "Silverlight" oder Adobes "Flash" geladen werden kann. Falls notwendig, kann der Mittelteil der Animationssequenzen 3a,3b und/oder Texturanimationen 4a, 4b, 4c in gewissen Schleifen nochmals durchlaufen werden. Um die Dateigröße der Animationssequenzen 3a, 3b und/oder Texturanimationen 4a,4b,4c zu reduzieren, verwendet der Benutzer die Funktion der Objektdetailreduktion im Loopeditor zur Reduzierung der Auflösung der Einzelobjekte 2a,2b,2c,2d,2e,2f,2g und/oder der Animationssequenz 3a, 3b und/oder der Texturanimation 4a,4b,4c. Mittels eines Steuerelements 8a,8b werden nunmehr endgültige Animationssequenzen 3a,3b und/oder Texturanimationen 4a, 4b, 4c automatisch erstellt und in dem Programm mit vektorbasierten Seitenbeschreibungssprache, wie beispielsweise 3D-PDF, direkt erstellt.

Der Benutzer kann seine Veränderungen der Einzelobjekten 2a, 2b, 2c, 2d, 2e, 2f, 2g und/oder der Animationssequenz 3a, 3b und/oder der Texturanimation 4a,4b,4c am frei definierten Fluid- oder Meeresstrom interaktiv und in Echtzeit verfolgen. Die am Markt befindlichen Technologien wie beispielsweise "Next Limits" oder "RealFlow" ermöglichen den Benutzer zwar die Objekte 1 als Fluide zu parametrisieren, es gibt jedoch keine echte Vorschau, die den Benutzer unmittelbar und mit 25 Bildern/Sekunde erkennen lässt, was für Auswirkungen die Parameterveränderungen auf das Verhalten der Einzelobjekten 2a,2b,2c,2d,2e,2f,2g und/oder der Animationssequenz 3a, 3b und/oder der Texturanimation 4a,4b,4c hat. Dazu bedarf es in solchen Programmen einer zeitaufwendigen Vorschausimulation die dann gecached wird um sie den Benutzer zu zeigen. Verändert er die Parameter, muss die gesamte Simulation mit zum Teil erheblichem Zeitaufwand neu berechnet werden.

Es ist ebenfalls vorgesehen, dass innerhalb des Zeichnungsprogramms 5 und/oder des weiteren Programms 6 das grafische Datenformate, beispielsweise das OpenGL- oder das DirectX-Format, verwenden und in Echtzeit die Veränderung der Oberflächenfarben grafisch darstellen und somit von einem Betrachter beobachtet werden können. Diese Oberflächenfarben sind nur dann zu sehen, wenn man vorher einen Button für die Sichtbarkeit von Eigenschaften aktiviert hat. Soll beispielsweise ein Ball als animiertes Objekt 1 verändert werden, färbt die Animationsfunktion den ausgewählten Ball als animiertes Objekt 1 rot. Damit ist erkennbar, welche Objekte 1 oder Objektteile aufgrund der Auswahl mittels der Animationsfunktion derzeit ablaufen. Blau könnte für Wassersimulation mit vielen Objekte 1 stehen grün für das Ausblenden eines Objekts 1 rosa steht für ein Objekt 1, dass kollidieren wird, rosa-rot steht für ein Objekt 1, dass eine Eigendeformation besitzt.

Auch die Simulation von Film- und Spieleanwendung ist mittels des vorliegenden Verfahrens möglich. Man erstellt mittels des Zeichnungsprogramms 5,6 eine prozentuale 3D-Map von Haaren, die als Objekte 1 definiert werden. Um die Haare als Objekte 1 in Echtzeit darstellen zu können, legt man eine Vielzahl von Schnittebenen 9a, 9b, 9c, 9d, 9e, 9f durch das Volumenhaar. Die Schnittebenen 9a, 9b, 9c, 9d, 9e, 9f stechen durch die zu modellierenden Haare und hinterlassen auf ihrer 2D-Ebene einen Querschnitt des gerade geschnittenen Haars. Dieser Querschnitt wird von dem Zeichnungsprogramm 5 dargestellt. Alles was nicht geschnitten wurde, ist transparent. Aufgefächert vom Haaransatz bis zur Haarspitze bilden also fünfzehn, entlang der Haare verteilte, zweidimensionale Schnittebenen 9a,9b,9c,9d,9e,9f die Haare mit dem jeweiligen Querschnitt eines Haares und einer Textur ab.

Es gibt auch eine andere Variante, um Haare in Echtzeit zu erstellen. Hierzu werden in einer Bodenplatte als Objekt 1 mit kleinen Löchern. Diese Bodenplatte als Objekt 1 bewegt sich sehr schnell von einem Punkt zum nächsten Punkt. Dabei wird eine Bewegungsunschärfe bei der Simulation 10 eingeschaltet. Die Löcher in der Bodenplatte als Objekt 1 bleiben frei, weil da, wo Luft ist, auch keine Bewegungsunschärfe vorliegen kann. Dazu wird nur jedes zweite Einzelobjekt 2a,2b,2c,2d,2e,2f,2g berechnet, damit man keine fließende Bewegung von einem Punkt zum nächsten erkennen kann. Somit entsteht der Eindruck, die Bewegungsunschärfe "steht" und bewegt sich nicht. Durch den Effekt sieht es so aus, als wenn Gras aus der Bodenplatte als Objekt 1 wächst.

## Patentansprüche

1. Verfahren zur Darstellung eines animierten Objekts (1) in Form einer Animationssequenz (3a, 3b) durch Erzeugung einer Abfolge von vektorbasierten Einzelobjekten (2a,2b,2c,2d,2e,2f) für definierte Zeitpunkte der Animationssequenz (3a, 3b) des Objekts (1) und Zusammenfügung (13) der vektorbasierter Einzelobjekte (2a,2b,2c,2d,2e,2f) für definierte Zeitpunkte zur Animationssequenz (3a, 3b) mit folgenden Verfahrensschritten:
• Berechnung (12) von Oberflächenveränderungen des Objekts (1) als Texturanimation (4a, 4b, 4c), wobei die Texturanimation (4a, 4b, 4c) des Objekts (1) mittels eines Zeichnungsprogramms (5,6) erstellt und mittels eines Programms (7) mit vektorbasierter Seitenbeschreibungssprache mit dem Objekt (1) verknüpft wird;
• Projektion (14) der Texturanimation (4a, 4b, 4c) auf das Objekt (1) in der Animationssequenz (3a, 3b) mittels des Programms (7) mit vektorbasierten Seitenbeschreibungssprache, wobei die Animationssequenz (3a, 3b) mit der Texturanimation (4a, 4b, 4c) des Objekts (1) zusammengesetzt wird;
• Gleichzeitiges Ablaufen (15) der Animationssequenz (3a,3b) mit der Texturanimation (4a, 4b, 4c) und damit Erzeugung des Eindruckes eines animierten Objekts (1).

2. Verfahren nach Anspruch 1, **dadurch gekennzeichnet, dass** die Texturanimation (4a, 4b, 4c) des Objektes (1) aufgrund einer numerischen Simulation (10) ermittelt und mittelt des Programms (7) mit vektorbasierten Seitenbeschreibungssprache mit dem Objekt (1) verknüpft wird.

3. Verfahren nach einem der Ansprüche 1 bis 2, **dadurch gekennzeichnet, dass** eine weitere Texturanimation (4a, 4b, 4c) als Hintergrundebene des Objekts (1) mittels des Zeichnungsprogramms (5,6) erstellt und mittels des Programms (7) mit vektorbasierter Seitenbeschreibungssprache als Hintergrundebene des Objekts (1) mit der Animationssequenz (3a, 3b) verknüpft wird.

4. Verfahren nach einem der Ansprüche 1 bis 3, **dadurch gekennzeichnet, dass** die Texturanimation (4a, 4b, 4c) aufgrund der interaktiven Variation von vorgebbaren Randbedingungen durch einen Benutzer variiert und die jeweils variierte Texturamination (4a, 4b, 4c) auf das Objekt (1) mittels des Programms (7) mit vektorbasierter Seitenbeschreibungssprache interaktiv durch die vorgebbaren Randbedingungen des Benutzers projiziert wird.

5. Verfahren nach einem der Ansprüche 1 bis 4, **dadurch gekennzeichnet, dass** ein Betrachtungswinkel auf das Objekt (1) mittels des Programms (7) mit vektorbasierten Seitenbeschreibungssprache interaktiv durch einen Benutzer gesteuert wird.

6. Verfahren nach Anspruch 5, **dadurch gekennzeichnet, dass** eine Lichttextur als Texturanimation (4a, 4b, 4c) bezogen auf das Objekt (1) berechnet und in Abhängigkeit vom Betrachtungswinkel auf das Objekt (1) projiziert wird.

7. Verfahren nach einem der Ansprüche 1 bis 6, **dadurch gekennzeichnet, dass** das Objekt (1) aus Polygonen und/oder Dreiecken und/oder nicht-uniforme rationale B-Splines und/oder Voxels zusammengesetzt wird.

8. Verfahren nach einem der Ansprüche 1 bis 7, **dadurch gekennzeichnet, dass** eine erste Abfolge von vektorbasierten Einzelobjekten (2a, 2b, 2c, 2d, 2e, 2f) für eine erste Animationssequenz (3a,3b) des Objekts (1) mit einer zweiten Abfolge von vektorbasierten Einzelobjekten (2a, 2b, 2c, 2d, 2e, 2f) für eine zweiten Animationssequenz (3a, 3b) des Objekts (1) kombiniert wird.

9. Verfahren nach Anspruch 8, **dadurch gekennzeichnet, dass** erste Oberflächenveränderungen für die erste Abfolge von vektorbasierten Einzelobjekten (2a,2b,2c,2d,2e,2f) als erste Texturanimation (4a, 4b, 4c) und zweite Oberflächenveränderungen für die zweite Abfolge von vektorbasierten Einzelobjekte (2a,2b,2c,2d,2e,2f) als zweite Texturanimation (4a,4b,4c) berechnet und mit den Animationssequenzen (3a,3b) des Objekts (1) mittels des Programms (7) mit vektorbasierter Seitenbeschreibungssprache zusammengefügt werden.

10. Verfahren nach einem der Ansprüche 1 bis 9, **dadurch gekennzeichnet, dass** für mehrere Objekte (1) und/oder die Hintergrundebene jeweils Oberflächenveränderungen ermittelt und mittels des Programms (7) mit vektorbasierten Seitenbeschreibungssprache zusammengefügt werden.

11. Verfahren nach einem der Ansprüche 1 bis 10, **dadurch gekennzeichnet, dass** die ersten und letzten Einzelobjekte vektorbasierten (2a,2b,2c,2d,2e,2f) der Animationssequenz (3a, 3b) so aufeinander abgestimmt werden, dass eine Endlosschleife der Animationssequenz (3a, 3b) des Objekts (1) darstellbar ist.

12. Verfahren nach Anspruch 11, dadurch gekenntzeichnet, dass die Animationssequenz (3a,3b) und die Texturanimation (4a,4b,4c) synchron in einer Endlosschleife abgespielt werden, wobei das erste und das letzte vektorbasierte Einzelobjekt (2a,2b,2c,2d,2e,2f) der Animationssequenz (3a, 3b) und die zugeordnete Oberflächenveränderung als Texturanimation (4a, 4b, 4c) des ersten und des letzten Einzelobjektes (2a,2b,2c,2d,2e,2f) nahezu identisch sind.

13. Verfahren nach einem der Ansprüche 1 bis 12, **dadurch gekennzeichnet, dass** die Abfolge der vektorbasierten Einzelobjekte (2a, 2b, 2c, 2d, 2e, 2f) und/oder die Texturanimation (4a, 4b, 4c) und/oder die Lichttextur als Texturanimation (4a,4b,4c)in einer Anzeigeeinheit (18) angezeigt werden.

14. Verfahren nach einem der Ansprüche 1 bis 13, **dadurch gekennzeichnet, dass** die vektorbasierten Einzelobjekte (2a, 2b, 2c, 2d, 2e, 2f) bezogen auf vorgebbare Ebenen (9a, 9b, 9c, 9d, 9e, 9f) ermittelt werden und bezogen auf diese Ebenen (9a,9b,9c,9d,9e,9f) in der Animationssequenz (3a, 3b) des Objekts (1) angezeigt werden.

15. Verfahren nach einem der Ansprüche 1 bis 14, **dadurch gekennzeichnet, dass** die vektorbasierten Einzelobjekte (2a, 2b, 2c, 2d, 2e, 2f) und/oder die Texturanimation (4a, 4b, 4c) mittels einer Simulationseinheit ermittelt werden.

16. Computerprogrammprodukt mit Programmcode zur Ausführung des Verfahrens nach einem der Ansprüche 1 bis 15, wenn das Programm in einem Computer ausgeführt wird.

## Claims

1. Method for representing an animated object (1) in the form of an animation sequence (3a, 3b) by producing a sequence of vector-based individual objects (2a, 2b, 2c, 2d, 2e, 2f) for defined instants of the animation sequence (3a, 3b) of the object (1) and assembling (13) the vector-based individual objects (2a, 2b, 2c, 2d, 2e, 2f) for defined instants to form the animation sequence (3a, 3b), having the following method steps:
• calculating (12) surface changes in the object (1) as texture animation (4a, 4b, 4c), the texture animation (4a, 4b, 4c) of the object (1) being generated by means of a drawing program (5, 6) and being linked to the object (1) by means of a program (7) with vector-based page description language;
• projecting (14) the texture animation (4a, 4b, 4c) onto the object (1) in the animation sequence (3a, 3b) by means of the program (7) with vector-based page description language, the animation sequence (3a, 3b) being assembled with the texture animation (4a, 4b, 4c) of the object (1); and
• simultaneously running (15) the animation sequence (3a, 3b) with the texture animation (4a, 4b, 4c) and thereby producing the impression of an animated object (1).

2. Method according to Claim 1, **characterized in that** the texture animation (4a, 4b, 4c) of the object (1) is determined on the basis of a numerical simulation (10) and linked to the object (1) by means of the program (7) with vector-based page description language.

3. Method according to either of Claims 1 and 2, **characterized in that** a further texture animation (4a, 4b, 4c) is generated as background plane of the object (1) by means of the drawing program (5, 6) and is linked to the animation sequence (3a, 3b) by means of the program (7) with vector-based page description language as background plane of the object (1).

4. Method according to one of Claims 1 to 3, **characterized in that** the texture animation (4a, 4b, 4c) is varied by a user on the basis of the interactive variation of prescribable boundary conditions, and the respectively varied texture animation (4a, 4b, 4c) is projected onto the object (1) by means of the program (7) with vector-based page description language interactively by the prescribable boundary conditions of the user.

5. Method according to one of Claims 1 to 4, **characterized in that** a viewing angle of the object (1) is controlled interactively by a user by means of the program (7) with vector-based page description language.

6. Method according to Claim 5, **characterized in that** a light texture is calculated as texture animation (4a, 4b, 4c) with reference to the object (1) and is projected onto the object (1) as a function of the viewing angle.

7. Method according to one of Claims 1 to 6, **characterized in that** the object (1) is assembled from polygons and/or triangles and/or nonuniform rational B splines and/or voxels.

8. Method according to one of Claims 1 to 7, **characterized in that** a first sequence of vector-based individual objects (2a, 2b, 2c, 2d, 2e, 2f) for a first animation sequence (3a, 3b) of the object (1) is combined with a second sequence of vector-based individual objects (2a, 2b, 2c, 2d, 2e, 2f) for a second animation sequence (3a, 3b) of the object (1).

9. Method according to Claim 8, **characterized in that** first surface changes for the first sequence of vector-based individual objects (2a, 2b, 2c, 2d, 2e, 2f) are calculated as first texture animation (4a, 4b, 4c), and second surface changes for the second sequence of vector-based individual objects (2a, 2b, 2c, 2d, 2e, 2f) are calculated as second texture animation (4a, 4b, 4c), and are assembled with the animation sequences (3a, 3b) of the object (1) by means of the program (7) with vector-based page description language.

10. Method according to one of Claims 1 to 9, **characterized in that** surface changes are respectively determined for a plurality of objects (1) and/or the background plane and are assembled by means of the program (7) with vector-based page description language.

11. Method according to one of Claims 1 to 10, **characterized in that** the first and last vector-based individual objects (2a, 2b, 2c, 2d, 2e, 2f) of the animation sequence (3a, 3b) are matched with one another such that an endless loop of the animation sequence (3a, 3b) of the object (1) can be represented.

12. Method according to Claim 11, **characterized in that** the animation sequence (3a, 3b) and the texture animation (4a, 4b, 4c) are played back synchronously in an endless loop, the first and the last vector-based individual object (2a, 2b, 2c, 2d, 2e, 2f) of the animation sequence (3a, 3b) and the assigned surface change as texture animation (4a, 4b, 4c) of the first and the last individual object (2a, 2b, 2c, 2d, 2e, 2f) are virtually identical.

13. Method according to one of Claims 1 to 12, **characterized in that** the sequence of the vector-based individual objects (2a, 2b, 2c, 2d, 2e, 2f) and/or the texture animation (4a, 4b, 4c) and/or the light texture are displayed as texture animation (4a, 4b, 4c) in a display unit (18).

14. Method according to one of Claims 1 to 13, **characterized in that** the vector-based individual objects (2a, 2b, 2c, 2d, 2e, 2f) are determined with reference to prescribable planes (9a, 9b, 9c, 9d, 9e, 9f) and are displayed with reference to said planes (9a, 9b, 9c, 9d, 9e, 9f) in the animation sequence (3a, 3b) of the object (1).

15. Method according to one of Claims 1 to 14, **characterized in that** the vector-based individual objects (2a, 2b, 2c, 2d, 2e, 2f) and/or the texture animation (4a, 4b, 4c) are determined by means of a simulation unit.

16. Computer program product with program code for executing the method according to one of Claims 1 to 15 when the program is executed on a computer.

## Revendications

1. Procédé de représentation d'un objet animé (1) sous la forme d'une séquence d'animation (3a, 3b) en générant une suite d'objets individuels vectoriels (2a, 2b, 2c, 2d, 2e, 2f) pour des instants définis de la séquence d'animation (3a, 3b) de l'objet (1) et en assemblant (13) les objets individuels vectoriels (2a, 2b, 2c, 2d, 2e, 2f) pour des instants définis en la séquence d'animation (3a, 3b), comprenant les étapes de procédé suivantes :
* calcul (12) de modifications de la surface de l'objet (1) sous la forme d'une animation de texture (4a, 4b, 4c), l'animation de texture (4a, 4b, 4c) de l'objet (1) étant créée au moyen d'un programme de dessin (5, 6) et liée à l'objet (1) au moyen d'un programme (7) avec langage de description de page vectoriel ;
* projection (14) de l'animation de texture (4a, 4b, 4c) sur l'objet (1) dans la séquence d'animation (3a, 3b) au moyen du programme (7) avec langage de description de page vectoriel, la séquence d'animation (3a, 3b) étant composée avec l'animation de texture (4a, 4b, 4c) de l'objet (1) ;
* déroulement simultané (15) de la séquence d'animation (3a, 3b) avec l'animation de texture (4a, 4b, 4c) et ainsi génération de l'impression d'un objet (1) animé.

2. Procédé selon la revendication 1, **caractérisé en ce que** l'animation de texture (4a, 4b, 4c) de l'objet (1) est déterminée en s'appuyant sur une simulation numérique (10) et liée à l'objet (1) au moyen du programme (7) avec langage de description de page vectoriel.

3. Procédé selon l'une des revendications 1 à 2, **caractérisé en ce qu'**une animation de texture (4a, 4b, 4c) supplémentaire est créée en tant qu'arrière-plan de l'objet (1) au moyen du programme de dessin (5, 6) et liée à la séquence d'animation (3a, 3b) en tant qu'arrière-plan de l'objet (1) au moyen du programme (7) avec langage de description de page vectoriel.

4. Procédé selon l'une des revendications 1 à 3, **caractérisé en ce que** l'animation de texture (4a, 4b, 4c) est modifiée sur la base de la variation interactive de conditions aux limites pouvant être prédéfinies par un utilisateur et l'animation de texture (4a, 4b, 4c) modifiée correspondante est projetée sur l'objet (1) de manière interactive par les conditions aux limites pouvant être prédéfinies de l'utilisateur au moyen du programme (7) avec langage de description de page vectoriel.

5. Procédé selon l'une des revendications 1 à 4, **caractérisé en ce qu'**un angle d'observation sur l'objet (1) est commandé de manière interactive par un utilisateur au moyen du programme (7) avec langage de description de page vectoriel.

6. Procédé selon la revendication 5, **caractérisé en ce qu'**une texture lumineuse faisant office d'animation de texture (4a, 4b, 4c) rapportée à l'objet (1) est calculée et projetée sur l'objet (1) en fonction de l'angle d'observation.

7. Procédé selon l'une des revendications 1 à 6, **caractérisé en ce que** l'objet (1) est composé de polygones et/ou de triangles et/ou de B-splines rationnelles non uniformes et/ou de voxels.

8. Procédé selon l'une des revendications 1 à 7, **caractérisé en ce qu'**une première suite d'objets individuels vectoriels (2a, 2b, 2c, 2d, 2e, 2f) pour une première séquence d'animation (3a, 3b) de l'objet (1) est combinée avec une deuxième suite d'objets individuels vectoriels (2a, 2b, 2c, 2d, 2e, 2f) pour une deuxième séquence d'animation (3a, 3b) de l'objet (1).

9. Procédé selon la revendication 8, **caractérisé en ce que** des premières modifications de surface pour la première suite d'objets individuels vectoriels (2a, 2b, 2c, 2d, 2e, 2f) sont calculées en tant que première animation de texture (4a, 4b, 4c) et des deuxièmes modifications de surface pour la deuxième suite d'objets individuels vectoriels (2a, 2b, 2c, 2d, 2e, 2f) sont calculées en tant que deuxième animation de texture (4a, 4b, 4c) et sont assemblées avec les séquences d'animation (3a, 3b) de l'objet (1) au moyen du programme (7) avec langage de description de page vectoriel.

10. Procédé selon l'une des revendications 1 à 9, **caractérisé en ce que** des modifications de surface respectives sont déterminées pour plusieurs objets (1) et/ou l'arrière-plan et sont assemblées au moyen du programme (7) avec langage de description de page vectoriel.

11. Procédé selon l'une des revendications 1 à 10, **caractérisé en ce que** les premier et dernier objets individuels vectoriels (2a, 2b, 2c, 2d, 2e, 2f) de la séquence d'animation (3a, 3b) sont accordés l'un sur l'autre de telle sorte qu'il est possible de représenter une boucle sans fin de la séquence d'animation (3a, 3b) de l'objet (1).

12. Procédé selon la revendication 11, **caractérisé en ce que** la séquence d'animation (3a, 3b) et l'animation de texture (4a, 4b, 4c) sont jouées de manière synchrone dans une boucle sans fin, les premier et dernier objets individuels vectoriels (2a, 2b, 2c, 2d, 2e, 2f) de la séquence d'animation (3a, 3b) et la modification de surface associée faisant office d'animation de texture (4a, 4b, 4c) des premier et dernier objets individuels (2a, 2b, 2c, 2d, 2e, 2f) étant quasiment identiques.

13. Procédé selon l'une des revendications 1 à 12, **caractérisé en ce que** la suite d'objets individuels vectoriels (2a, 2b, 2c, 2d, 2e, 2f) et/ou l'animation de texture (4a, 4b, 4c) et/ou la texture lumineuse faisant office d'animation de texture (4a, 4b, 4c) sont affichées dans une unité d'affichage (18).

14. Procédé selon l'une des revendications 1 à 13, **caractérisé en ce que** les objets individuels vectoriels (2a, 2b, 2c, 2d, 2e, 2f) sont déterminés en référence à des plans (9a, 9b, 9c, 9d, 9e, 9f) pouvant être prédéfinis et sont affichés en référence à ces plans (9a, 9b, 9c, 9d, 9e, 9f) dans la séquence d'animation (3a, 3b) de l'objet (1).

15. Procédé selon l'une des revendications 1 à 14, **caractérisé en ce que** les objets individuels vectoriels (2a, 2b, 2c, 2d, 2e, 2f) et/ou l'animation de texture (4a, 4b, 4c) sont déterminés au moyen d'une unité de simulation.

16. Produit programme informatique comprenant un code de programme destiné à mettre en oeuvre le procédé selon l'une des revendications 1 à 15 lorsque le programme est exécuté dans un ordinateur.
